# EUROPÄISCHE PATENTANMELDUNG

(11) **EP 1 744 022 A1**
(43) Veröffentlichungstag der Anmeldung: **17.01.2007**
(21) Anmeldenummer: 05106302.2
(22) Anmeldetag: 11.07.2005
(51) Int. Cl.: F01N 3/025, F01N 3/20

(54) **Reduzierung von Ölverdünnung**

(71) Anmelder: Ford Global Technologies, LLC., Dearborn, MI 48126 (US)
(72) Erfinder: Maertens, Steven, 31100, Toulouse (FR)
(74) Vertreter: Drömer, Hans-Carsten

(57) **Zusammenfassung**

Die Erfindung betrifft ein Verfahren zur Regenerierung von Abgasreinigungsanlagen in einem Abgasstrom von Verbrennungsmotoren. Eine Brennstoffeinspritzvorrichtung versorgt zusätzlich zu einer Haupteinspritzung den Verbrennungsmotor mittels einer späten Nacheinspritzung mit zusätzlichem Brennstoff. Die späte Nacheinspritzung wird in nicht allen Zylindern eines mehrere Zylinder aufweisenden Verbrennungsmotors durchgeführt.

## Beschreibung

Die Erfindung betrifft ein Verfahren zur Regenerierung von Abgasreinigungsanlagen in einem Abgasstrang von Verbrennungsmotoren, wobei eine Brennstoffeinspritzvorrichtung zusätzlich zu einer Haupteinspritzung den Verbrennungsmotor mittels einer späten Nacheinspritzung mit zusätzlichem Brennstoff versorgt.

Derartige Verfahren sind bekannt und werden beispielsweise zur Regenerierung von Abgasreinigungsanlagen wie beispielsweise Dieselpartikelfiltern (Rußabscheidung) und/oder NOx-Fallen (NOx Lagerung/Umwandlung) und/oder einer Kombination von beiden (DPNR) verwendet. Nachteiligerweise weisen diese Systeme eine begrenzte Lagerkapazität bezüglich des Rußes, des NOx und/oder von Sulfaten (Vergiftung) auf und erfordern daher eine periodische aktive Regenerierung. Eine passive Regenerierung wäre zwar auch denkbar, wobei dies aber nur in einem bestimmten Temperaturfenster möglich ist.

Üblicherweise muß ein Dieselpartikelfilter alle 500 bis 1.500 km regeneriert werden, wobei ein Volumen derart gewählt wird, daß eine Ölverschmutzung unter ein bestimmtes Limit begrenzt wird. Nachteiligerweise weist diese Lösung aber einen unvorteilhaften Konflikt zwischen der Regenerationszeit (Kraftstoffverschwendung) und Kosten, Gewicht sowie dem benötigten Bauraum der zugeordneten Komponenten auf. Von daher ist diese Möglichkeit nicht für alle Fahrzeuge geeignet.

Für eine NOx-Falle (oder jedes andere System, welches einen sog. fetten Betriebszustand benötigt) ist als nachteilig anzusehen, daß die Regeneration üblicherweise alle 1 bis 5 km erforderlich ist. Von daher sind sehr drastische Maßnahmen zu treffen, um eine Ölverschmutzung zu reduzieren.

Beide Systeme (Dieselpartikelfilter, NOx-Falle) verwenden späte Nacheinspritzungen in den Zylindern, um den Abgasen unverbrannte Hydrocarbonate zuzuführen. Eine solche späte Nacheinspritzung wird beispielsweise 60 bis 120° nach TDC (Top Dead Center, oberer Totpunkt) durchgeführt. Bei einem Dieselpartikelfilter wird beispielsweise Wärme erzeugt, um die Temperatur des Katalysators zu erhöhen. Für die NOx-Falle werden fette Betriebszustände in der Falle verwirklicht.

Nachteiligerweise hat sich gezeigt, daß sich diese späte Einspritzung von zusätzlichem Brennstoff aufgrund des relativ geringen Zylinderdruckes an der Zylinderwand niederschlägt und sich mit dem an der Zylinderwand befindlichen Öl vermischt. Ein Teil dieses zusätzlichen Brennstoffes gelangt so in die Ölwanne und erhöht den Brennstoff in dem Öl, so daß eine gesteigerte Ölverschmutzung bzw. Ölverdünnung in der Ölwanne vorliegt. Dies bewirkt nicht nur einen gesteigerten Brennstoffverbrauch, sondern erfordert auch zusätzliche Maßnahmen, diesen Brennstoff aus dem Öl herauszufiltern. Derartige Vorrichtungen erhöhen aber nicht nur das Gewicht des Kraftfahrzeuges, und beeinflussen damit den Kraftstoffverbrauch nachteilhaft, sondern sind auch sehr kompliziert auszugestalten. Durch den Brennstoff in dem Öl wird dieses zudem nachteilig verdünnt, so daß die Schmiereigenschaften des Öls nachteilig beeinflußt werden.

Der Erfindung liegt die Aufgabe zugrunde, ein Verfahren der eingangs genannten Art mit einfachen Mitteln dahin gehend zu verbessern, daß die Ölverschmutzung mit dem zusätzlichen Brennstoff weitgehend verringert wird.

Erfindungsgemäß wird die Aufgabe dadurch gelöst, daß die späte Nacheinspritzung in nicht allen Zylindern eines mehrere Zylinder aufweisenden Verbrennungsmotors durchgeführt wird.

Zweckmäßig im Sinne der Erfindung ist, wenn die späte Nacheinspritzung in lediglich einem Zylinder eines mehrere Zylinder aufweisenden Verbrennungsmotors durchgeführt wird.

Günstigerweise ist hierbei vorgesehen, daß eine zusätzliche Brennstoffmenge der späten Nacheinspritzung, bezogen auf eine ursprüngliche zusätzliche Brennstoffmenge, in dem lediglich einen Zylinder erhöht ist, wobei bevorzugt vorgesehen ist, daß die zusätzliche Brennstoffmenge der späten Nacheinspritzung bezogen auf eine ursprüngliche zusätzliche Brennstoffmenge in dem lediglich einen Zylinder verdoppelt ist, um denselben Mengenstrom von Hydrocarbonaten zu erreichen.

Das erfindungsgemäße Verfahren ist beispielsweise geeignet zur Anwendung in Verbrennungsmotoren, welche als Reihenmotor ausgestaltet sind, wobei das erfindungsgemäße Verfahren selbstverständlich auch zur Anwendung in Verbrennungsmotoren geeignet ist, welche als V-Motor oder in anderer Bauart ausgestaltet sind.

Bei einem als Reihenmotor ausgestalteten Verbrennungsmotor ist hierbei zweckmäßigerweise vorgesehen, daß vorzugsweise lediglich ein Zylinder der in Reihe angeordneten Zylinder beispielsweise eines 4-Zylinder-Reihenmotors mit der zusätzlichen Brennstoffmenge versorgt wird, so daß die Abgasreinigungsanlagen entsprechend regeneriert werden können. Bei einem als V-Motor ausgestalteten Verbrennungsmotor wird jeweils bevorzugt lediglich ein Zylinder der sich gegenüberliegenden V-Reihen des Motors mit der zusätzlichen Brennstoffmenge versorgt, so daß die entsprechende Abgasreinigungsanlage gegebenenfalls regeneriert werden kann.

Vorteilhafterweise wird erfindungsgemäß ein Verfahren zur Verfügung gestellt, welches eine Ölverschmutzung mit unverbranntem Brennstoff weitgehend verringert. Dies wird dadurch erreicht, daß die zusätzliche eingespritzte Brennstoffmenge, bezogen auf ihren Ursprungsbetrag, erheblich reduziert ist, da beispielsweise in einem 4-Zylinder-Reihenmotor lediglich ein Zylinder mit der zusätzlichen Brennstoffmenge versorgt wird. Allerdings ist vorteilhaft vorgesehen, daß die Brennstoffmenge, bezogen auf die ursprüngliche Brennstoffmenge in diesem einen Zylinder, erhöht ist, um vorzugsweise die gleiche Menge an Hydrocarbonaten zuzuführen. Besonders vorteilhaft ist hierbei, daß die späte Nacheinspritzung lediglich in einem Zylinder durchgeführt wird. Damit kann sich der zusätzliche Brennstoff der Nacheinspritzung aber auch nur noch an einer Zylinderwand niederschlagen und nicht mehr an allen Zylinderwänden. Hierbei liegt der Erfindung die Erkenntnis zugrunde, daß die Ölverdünnung in erster Linie von dem Betrag der Kontaktfläche des nach eingespritzten Brennstoffs bzw. der zusätzlichen Brennstoffmenge mit der Zylinderwand, und nicht so sehr von der Menge des nach eingespritzten Brennstoffs abhängt. Dadurch, daß lediglich in einem Zylinder nach eingespritzt wird, reduziert sich somit günstiger Weise der Betrag der Kontaktfläche entsprechend.

Natürlich liegt es im Rahmen der Erfindung, wenn der Brennstoffeinspritzvorrichtung ein entsprechendes Steuergerät zugeordnet ist, so daß die späte Nacheinspritzung in einer vorgegebenen Reihenfolge jeweils einen anderen Zylinder mit der zusätzlichen Brennstoffmenge versorgt.

## Patentansprüche

1. Verfahren zur Regenerierung von Abgasreinigungsanlagen in einem Abgasstrang von Verbrennungsmotoren, wobei eine Brennstoffeinspritzvorrichtung zusätzlich zu einer Haupteinspritzung den Verbrennungsmotor mittels einer späten Nacheinspritzung mit zusätzlichem Brennstoff versorgt,
**dadurch gekennzeichnet, daß**
die späte Nacheinspritzung in nicht allen Zylindern eines mehrere Zylinder aufweisenden Verbrennungsmotors durchgeführt wird.

2. Verfahren nach Anspruch 1,
**dadurch gekennzeichnet, daß**
die späte Nacheinspritzung in lediglich einem Zylinder eines mehrere Zylinder aufweisenden Verbrennungsmotors durchgeführt wird.

3. Verfahren nach Anspruch 1 oder 2,
**dadurch gekennzeichnet, daß**
ein Betrag einer Kontaktfläche des zusätzlichen Brennstoffs reduziert ist.

4. Verfahren nach einem der vorhergehenden Ansprüche,
**dadurch gekennzeichnet, daß**
der Verbrennungsmotor als Reihenmotor ausgestaltet ist.

5. Verfahren nach einem der Ansprüche 1 bis 4,
**dadurch gekennzeichnet, daß**
der Verbrennungsmotor als V-Motor ausgestaltet ist.
